# DEMANDE DE BREVET EUROPEEN

(11) **EP 3 792 114 A1**
(43) Date de publication de la demande: **17.03.2021**
(21) Numéro de dépôt: 20179875.8
(22) Date de dépôt: 15.06.2020
(51) Int. Cl.: B60R 11/04, B60R 11/00

(54) **DISPOSITIF DE PRISE DE VUE VERS L'AVANT AU TRAVERS D'UN PARE-BRISE DE VÉHICULE**

(30) Priorité: 10.09.2019 FR 1909918
(71) Demandeur: Renault S.A.S., 92100 Boulogne-Billancourt (FR)
(72) Inventeur: ABDOUN, Victor, 78280 Guyancourt (FR); MONTFORT, Patrice, 78770 AUTOUILLET (FR)

(57) **Abrégé**

Dispositif de prise de vue vers l'avant d'un véhicule au travers du pare-brise (5) de celui-ci, comprenant une interface plane de fixation (1) collée sur le pare-brise, une caméra constituée d'un objectif de de prise de vue (2) et d'un bloc de traitement d'image (3), et un obturateur (4) protégeant l'objectif de la caméra, des reflets sur le pare-brise, caractérisé en ce que l'objectif (2) de la caméra est intégré à l'interface de fixation (1), avant le collage de celle-ci sur le pare-brise (5).

## Description

La présente invention se rapporte au montage d'une caméra sur un pare-brise de véhicule.

Plus précisément, elle a pour objet un dispositif de prise de vue vers l'avant d'un véhicule au travers de son pare-brise, comprenant une interface plane de fixation collée sur le pare-brise, une caméra constituée d'un objectif de prise de vue et d'un bloc de traitement d'image, et un obturateur protégeant l'objectif de la caméra, des reflets sur le pare-brise.

Les systèmes avancés d'assistance à la conduite, ou systèmes ADAS (Advanced Driver Assistance Systems), visant à garantir la sécurité et le confort de conduite, sont de plus en plus présents sur les véhicules. Ils comprennent des caméras vidéo vers l'avant de la scène routière, implantées derrière le pare-brise.

Les caméras de prise de vue vers l'avant, localisées dans la partie supérieure du parebrise, sont souvent associées au rétroviseur intérieur. Elles sont généralement entourées d'un obturateur, ou « shutter » en anglais, qui délimite le champ de vision de la caméra, et protège son objectif des reflets.

Les caméras ADAS avant, sont centrées sur le pare-brise. Elles font partie, avec leur obturateur, d'un empilage de pièces sur l'axe central du pare-brise. Avec la diversification des aides à la conduite, les dimensions des caméras et de leurs obturateurs augmentent. Les nouvelles caméras trouvent difficilement place dans les coques de pare-brise normales.

Mais si la coque devient trop volumineuse, elle réduit le champ de vision du conducteur, dont l'amplitude doit respecter la réglementation. Enfin, les coques volumineuses sont toujours mal perçues en termes d'esthétique et de qualité.

Par la publication US02015/0097013, on connaît un système de fixation, comprenant une platine collée sur le pare-brise du véhicule. La platine supporte à la fois une embase de rétroviseur intérieur, et un bloc de caméra.

Dans ce type d'assemblage, la platine est généralement collée sur le pare-brise par le fournisseur du pare-brise, avant la livraison du pare-brise à l'usine de montage de véhicule. Le bloc de caméra est ensuite encastré entre les bras de la platine par un opérateur.

Afin d'assurer le montage dans tous les cas de figure, en dépit des dispersions de chaque composant se cumulant dans la chaîne de côtes, on doit ménager un jeu d'au moins 3mm entre l'objectif et le parebrise. Ce jeu permet de s'affranchir de bruyance causée par l'entrée en contact éventuelle de l'objectif avec le pare-brise, et par l'entrée en vibration de ces éléments, lorsque le moteur tourne.

La longueur et la largeur de l'obturateur dépendent de la valeur de ce jeu, de même que la longueur de la coque de protection et de style venant généralement recouvrir le système de prise de vue rapporté sur la platine et le plus souvent, l'embase du rétroviseur.

La présente invention vise à rendre plus compact le dispositif de prise de vue vers l'avant, de manière à réduire la longueur qu'il occupe sur le pare-brise, et son encombrement en volume à l'intérieur du véhicule.

Dans ce but, elle propose que l'objectif de la caméra soit intégré à son interface de fixation, avant le collage de celle-ci sur le pare-brise.

De préférence, l'interface de fixation est en matériau thermoplastique surmoulé autour de l'objectif de la caméra.

Dans un mode de réalisation particulier de l'invention, l'unité de traitement d'images est dissociée de l'objectif.

La présente invention sera mieux comprise à la lecture de la description suivante d'un mode de réalisation non limitatif de celle-ci, en se reportant aux dessins annexés.
[fig.1] est une vue de la nouvelle platine.
[fig.2] représente la objectif de la caméra et son unité de traitement d'images.
[fig.3] est une vue de dessus, avec l'obturateur.
[fig.4] est une vue simplifiée en coupe verticale et longitudinale, de l'ensemble du dispositif.

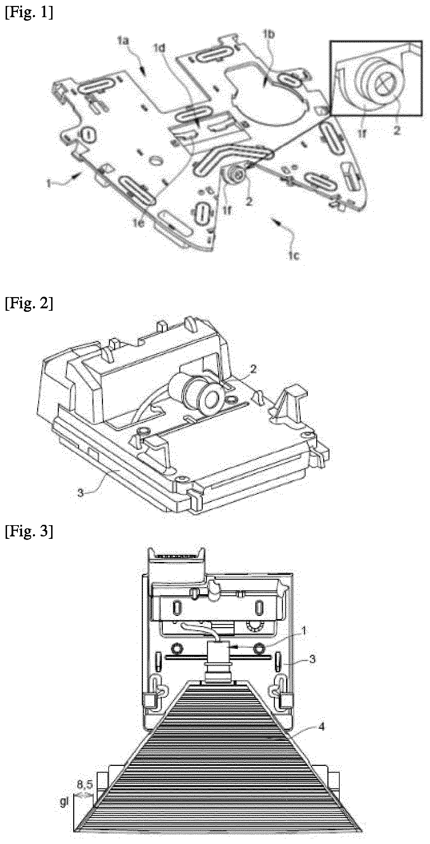

Sur la figure 1, on a représenté la nouvelle interface, ou platine 1, de fixation de caméra, vue de dessus, et en perspective. L'interface de fixation 1 est plane, de manière à pouvoir être collée sur le pare-brise (non représenté sur ce schéma). Elle présente plusieurs découpes, dont les principales correspondent à l'emplacement de l'embase de rétroviseur la, à celui d'un capteur de pluie et de lumière 1b, à celle de l'obturateur («shutter») 1c, et à celle de l'unité de traitement d'images de la caméra 1d, avec des pattes de retenue le pour celle-ci.

Le dispositif de prise de vue vers l'avant d'un véhicule au travers du pare-brise proposé comprend cette interface de fixation plane 1, collée sur le pare-brise. Il comprend également une caméra constituée d'un objectif de prise de vue 2 et d'un bloc de traitement d'image 3, et un obturateur 4, qui protège l'objectif 2, des reflets sur le pare-brise 5. Dans le mode de réalisation de préféré de l'invention, l'unité de traitement d'images 3 est dissociée de l'objectif 2 de la caméra.

Au fond de la découpe de l'obturateur 1c, de forme générale triangulaire, la platine est repliée vers le bas dans une direction transversale à l'axe de symétrie de la platine. Le triangle de la découpe 1c est tronqué, et la partie repliée de l'interface 1, forme un rabat 1f, constituant une paroi d'appui sensiblement verticale, face à la route. Le rabat 1f supporte l'objectif de la caméra, qui regroupe notamment une optique de prise de vue, un diaphragme, un capteur et des connecteurs. La caméra est constituée de l'objectif 2, des moyens de traitement d'image 3 déportés derrière et sous l'objectif 2, et de leurs moyens de connexion.

Sur la figure 3, on retrouve les deux parties 2, 3 de la caméra, et l'obturateur 4, sans l'interface 1. L'unité de traitement d'images 3 s'étend vers l'avant, sous l'objectif 2. Le rabat 1f s'étend vers le bas à l'écart du pare-brise 5. Il supporte l'objectif 2. Son ouverture triangulaire 1c est tronquée transversalement par la pliure du rabat 1f. L'objectif de la caméra fait face à la route au travers du rabat 1f. La découpe triangulaire de l'interface se superpose ainsi à la surface de l'obturateur 4, de sorte que le champ de l'objectif de la caméra 2 couvre l'ouverture de l'interface 1c et la surface de l'obturateur 4. L'obturateur 4 présente aussi une troncature, sous l'avant de l'objectif de caméra 2. La face avant de l'objectif 2 affleure le bord arrière de l'obturateur 4, dont la troncature, correspond à celle de l'interface 1.

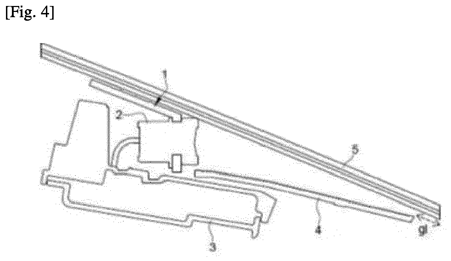

Sur la coupe de la figure 4, on voit la disposition de ces différents éléments, sous le pare-brise 5. On retrouve l'interface 1, l'objectif 2, le bloc de traitement d'image 3, et l'obturateur 4. L'objectif est engagé au travers du rabat 1f. L'unité de traitement d'images 3 peut être montée sur l'interface de fixation 1, indépendamment de l'objectif 2.

L'interface ,ou platine 1 est une pièce moulée en matériau thermoplastique. Conformément à l'invention, l'objectif 2 est intégré à l'interface 1, au moulage de celle-ci. En d'autres termes, l'interface de fixation 1 est surmoulée autour de l'objectif 2.

L'objectif 2 est ainsi intégré à l'interface 1, avant son collage sur le pare-brise 5. La connexion électronique entre l'objectif 2 et l'unité de traitement 3 peut être réalisée en usine, après leur montage sur l'interface 1.

Grâce à ce procédé, on peut prévoir un jeu nul entre l'objectif et la platine. La suppression du jeu préservé antérieurement, permet un gain substantiel sur la longueur de l'obturateur. Ce gain gL, estimé dans un cas concret à environ 14mm, par rapport à la longueur initiale de l'obturateur est identifié sur la figure 4. La disposition proposée permet également un gain en largeur gl d'environ 8,5 mm identifié sur la figure 3.

Ces gains sont déterminant pour les dimensions de la coque de protection (non représentée) recouvrant généralement l'interface, l'embase du rétroviseur intérieur, la caméra, et son obturateur.

En conclusion le jeu entre l'objectif de la caméra et le parebrise, est supprimé grâce à l'invention. Les dimensions de l'obturateur se réduisent fortement. La longueur de la coque de protection sur le parebrise se réduit en conséquence, avec un impact important sur la qualité perçue de l'intérieur du véhicule. La vision du conducteur est nettement améliorée, et la vision minimum réglementaire peut être respectée sur l'ensemble des véhicules concernés.

## Revendications

1. Dispositif de prise de vue vers l'avant d'un véhicule au travers du parebrise (5) de celui-ci, comprenant une interface plane de fixation (1) collée sur le pare-brise, une caméra constituée d'un objectif de prise de vue (2) et d'un bloc de traitement d'image (3), et un obturateur (4) protégeant l'objectif de la caméra, des reflets sur le pare-brise, **caractérisé en ce que** l'objectif (2) est intégré à l'interface de fixation (1), avant le collage de celle-ci sur le pare-brise (5).

2. Dispositif de prise de vue selon la revendication 1, **caractérisé en ce que** l'interface de fixation (1) est en matériau thermoplastique surmoulé autour de l'objectif (2) de la caméra.

3. Dispositif de prise de vue selon la revendication 1 ou 2, **caractérisé en ce que** l'interface de fixation (1) présente un rabat transversal (1f) s'étendant vers le bas à l'écart du pare-brise (5), qui supporte l'objectif (2) de la caméra.

4. Dispositif de prise de vue selon la revendication 3, **caractérisé en ce que** l'objectif (2) de la caméra fait face à la route au travers du rabat (1f).

5. Dispositif de prise de vue selon la revendication 3 ou 4, **caractérisé en ce que** l'interface de fixation (1) présente une ouverture de forme triangulaire tronquée transversalement par la pliure du rabat (1f).

6. Dispositif de prise de vue selon la revendication 5, **caractérisé en ce que** l'ouverture triangulaire de l'interface (1) se superpose à la surface de l'obturateur (4).

7. Dispositif de prise de vue selon la revendication 5 ou 6, **caractérisé en ce que** le champ de l'objectif (2) de la caméra couvre l'ouverture de l'interface (1c) et la surface de l'obturateur (4).

8. Dispositif de prise de vue selon l'une des revendications précédentes, **caractérisé en ce que** l'unité de traitement d'images (3) est dissociée de l'objectif (2) de la caméra.

9. Dispositif de prise de vue selon la revendication 8, **caractérisé en ce que** l'unité de traitement d'images (3) s'étend vers l'avant, sous l'objectif (2) de la caméra.

10. Dispositif de prise de vue selon la revendication 8 ou 9, **caractérisé en ce que** l'unité de traitement d'images (3) est montée sur l'interface de fixation (1), indépendamment de l'objectif (2) de la caméra.
